# EUROPEAN PATENT APPLICATION

(11) **EP 0 914 892 A1**
(43) Date of publication of application: **12.05.1999**
(21) Application number: 98120287.2
(22) Date of filing: 27.10.1998
(51) Int. Cl.: B23D 45/20, B23D 25/04

(54) **Flying shears**

(30) Priority: 07.11.1997 IT UD970203
(71) Applicant: ISPADUE SpA, 33079 Sesto al Reghena (PN) (IT)
(72) Inventor: Buscatti, Giuseppe, 12035 Racconigi (CN) (IT); Poggi, Enzo, 17100 Savona (IT)
(74) Representative: Petraz, Gilberto Luigi

(57) **Abstract**

Flying shears to shear to pre-ordained and desired sizes a base element (11), for example a metallic tube, fed continuously, the shears comprising a trolley (12) movable with alternate motion on a translation rail (13), the trolley (12) being associated with drive means suitable to move it, with every shearing cycle, from a start-of-cycle position (12a) in the direction of feed (17) of the base element (11) to be sheared and to accelerate it to a speed equal to the speed of advance of the base element (11) to allow the base element (11) to be gripped and sheared respectively by clamping organs (15) and shearing organs (16) included on board the trolley (12), shearing having been accomplished in correspondence with an end-of-cycle position (12b) the trolley (12) being returned by the drive means to the start-of-cycle position (12a) wherein it is prepared for the subsequent shearing action, the drive means consisting of at least a linear motor (14).

## Description

### FIELD OF THE INVENTION

This invention concerns a flying shears as set forth in the main claim.

The invention is employed, particularly if not only, in the field of flying shears for metallic and non-metallic tubes which shear to size tubes starting from a base element fed continuously.

### BACKGROUND OF THE INVENTION

The state of the art includes flying shears suitable to shear to size tubes from a continuous element supplied by feed means, for example floops or reels. These shears usually comprise a trolley, sliding on a translation rail, on which are mounted the milling disk which shears the tube and the jaw type gripper which clamps the tube and holds it in position before and during the shearing operation.

The trolleys are movable with alternate motion on the translation rail with the purpose of taking the milling disk, at the moment of shearing, to a linear speed compatible with the speed of advance of the tube so that shearing may take place.

To be more exact, the shearing cycle provides that when the tube is recognised as arriving in a set position upstream of the movable trolley, a signal is given to the trolley which starts moving in the direction of feed of the tube.

The advancing tube comes into cooperation with the movable trolley and, when the linear speed of the tube and the speed of the trolley are equal, the tube is gripped by the jaw grippers on board the trolley and is sheared by the milling disk.

When shearing has been carried out, the jaw grippers release the tube, the trolley inverts its direction of movement, stops at the start-of-cycle position and prepares itself for the subsequent shearing cycle.

The length of the travel of the movable trolley and the minimum length obtainable of the tube obviously depend on the compromise between the trolley's ability to accelerate/ decelerate and on the speed at which the tube is fed.

The movable trolley slides resting on the translation rail and below the rail there are collection means to collect the chips and dirt which is created during the shearing step.

The trolley is usually driven by a conventional DC motor connected to the trolley by flexible cables.

The need to improve the productivity, the efficiency and the environmental impact of these shears has led those working in this field to explore the possibilities of perfecting the shearing sequence and also of maximising the efficiency of the DC motors; however, so far no completely satisfactory results have been achieved, due to the objective constraints which are imposed by the structure of shears such as are known in the state of the art. These objective constraints mainly concern the structural limits, particularly in terms of the acceleration/deceleration ramp, of the conventional motors and the intrinsic discontinuity of the feeding and shearing processes.

To be more exact, the limits of conventional DC motors are principally connected with:
- limited accuracy in displacement, which means that it is impossible to fix limited tolerances on the cutting length of the tubes;
- mechanical plays, which substantially cannot be eliminated, between the motion transmission elements between the motor and the trolley, which cause premature wear, unreliability, noisiness and dangerous functioning conditions;
- limits in the accelerations and the speeds which can be achieved, which entail limits in the maximum productivity attainable by the shears;
- lack of cleanliness, large masses in movement, difficulties in maintenance, difficulties in and long times required for setting up operations, and other shortcomings.

Moreover, the search to find alternative solutions to conventional motors in the field of flying shears is hindered by the specific field of operations, which is characterised by an enormous production of chips and other dirt deriving from the repeated shearing operations, and also the traditional configuration, widely adopted by designers for a long time in this field, which imposes the choice of a movable trolley resting on the translation rail and not sufficiently protected.

This design solution, precisely because of the large quantity of polluting material produced during the operating cycles, has led those working in the field to neglect possible solutions with sophisticated and delicate motors which do not adapt well to work places which are particularly subject to infiltrations of chips, particles, dust and similar.

The present Applicant has faced the problem of increasing the productivity and efficiency, at the same time reducing the environmental impact, of such flying shears, overcoming the constraints connected with the traditional design concept and proposing a practical, functional, reliable and productive solution.

This solution, which also achieves other advantages as described hereafter, is set forth in this invention.

### SUMMARY OF THE INVENTION

The invention is set forth and characterised in the main claim, while the dependent claims describe variants of the idea of the main embodiment.

The flying shears according to the invention comprise means to feed the base element to be sheared to size, at least a movable trolley with alternate motion along a translation rail and carrying on board the organs which shear and clamp the tubes during the shearing step, and drive means for the trolley.

According to the invention, the drive means for the trolley consist of at least a linear motor.

In a first embodiment, the at least one linear motor has the magnets fixed and anchored on the translation rail, while the coils are movable and attached to the trolley.

According to a variant, the motor has the coils stationary and associated with the rail and the magnets movable and attached to the trolley.

Using linear motors guarantees, in this case, a plurality of operating advantages.

First of all, it guarantees precision in positioning, particularly during the steps when the trolley stops and reverses direction, which ensures that extremely limited tolerances are obtained on the length of the tube.

Moreover, it eliminates all the mechanical plays which are characteristic of traditional motor systems, such as for example those typical of chains, racks, ratiomotors, etc.

Furthermore, the performance in terms of speed and acceleration is considerably greater, which increases the productivity and the operating efficiency of the shears. Moreover, the environmental impact is extremely reduced, both in terms of noise and in terms of cleanliness and in terms of bulk and aesthetic impact.

The need for lubrication, the consumption, times required for and difficulties in maintenance and replacement operations, assembly and dis-assembly times are also reduced.

According to the invention, the trolley moves suspended from the translation rail structured as a cantilevered beam.

The suspended position of the trolley, which consequently conditions the shearing position, prevents chips, dust or other pollutant particles from falling onto the sliding guides or onto the elements of the linear motor, thus ensuring that the particularly delicate organs of the motor are preserved from possible pollution.

The chips and other pollutant particles fall downwards and, according to a variant, are collected in a container provided for this purpose below the translation rail.

According to a variant, the trolley moves resting on the translation rail located below the trolley.

The shearing trolley is advantageously made of light material in order to reduce the stresses exerted on the translation rail and to increase performance in terms of speed and acceleration due to the reduced inertia caused by the trolley.

According to a variant, the linear motor cooperates with cleaning means consisting of jets of air arranged in such a position as to prevent dust or pollutant particles from coming into contact with or depositing on parts of the motor or the sliding guides.

According to another variant, the linear motor cooperates with mechanical protection means of the guard or barrier type.

According to yet another variant, there are two or more trolleys arranged aligned on the translation rail, each of which is associated with a respective linear motor, and work in alternation.

### BRIEF DESCRIPTION OF THE DRAWINGS

The attached Figures are given as a non-restrictive example and show a preferential embodiment of the invention as follows:

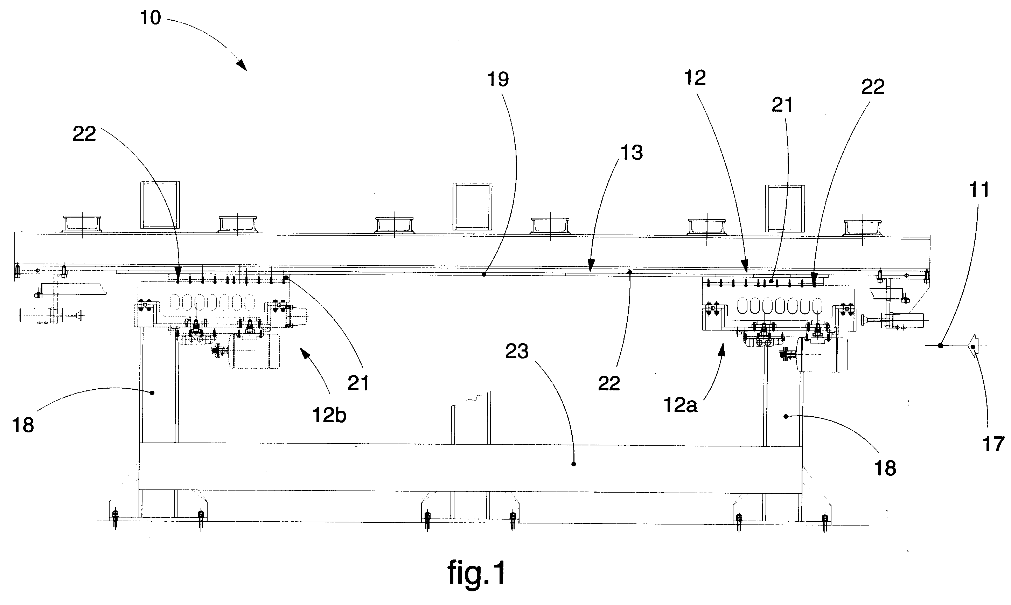

Fig. 1 is a side view of a flying shears according to the invention;

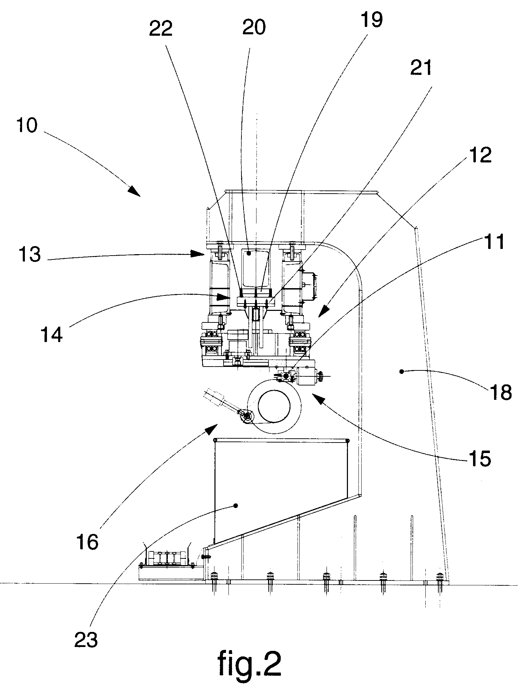

Fig. 2 is a part view of a transverse section of Fig. 1.

### DETAILED DESCRIPTION OF THE PREFERRED EMBODIMENT

The flying shears 10 shown in the attached Figures are located downstream of feed means, which are not shown here, to feed a base element 11, in this case a metallic tube, to be continuously sheared to pre-ordained and desired sizes.

The base element 11 arrives at the shears 10 in the direction of feed 17.

The shears 10 according to the invention have a movable trolley 12 which travels suspended from a translation rail 13 supported by a bearing structure consisting of vertical beams 18.

According to a variant which is not shown here, the shears 10 have two or more movable trolleys 12 used in alternation so as to allow maintenance operations to be carried out without interrupting the shearing cycle of the shears 10.

The trolley 12 is translated with alternate motion along the translation rail 13 so as to assume at least two extreme positions, respectively start-of-cycle 12a and end-of-cycle 12b.

The shearing cycle of the shears 10 provides that, when the tube 11 to be sheared arrives, the trolley 12 is translated in the direction of feed 17 of the tube 11 until it reaches a speed equal to the speed of the tube 11 to be sheared in correspondence with the desired shearing point.

Afterwards, the tube 11 is gripped by clamping organs 15, in this case of the type with jaws, and sheared to size by shearing organs 16, in this case of the type with a milling disk, both of these organs 15 and 16 being assembled on board the trolley 12.

When shearing is complete, the trolley 12 returns to its start-of-cycle position 12a.

According to the invention, the trolley 12 is driven by a linear motor 14 comprising a magnet-bearing bar 19, associated with a longitudinal beam 20 solid with the vertical beams 18, and a coil-bearing bar 21 solid with the trolley 12. According to a variant which is not shown here, the magnet-bearing bar 19 is solid with the trolley 12 and the coil-bearing bar 21 is solid with the longitudinal beam 20.

Using a linear motor 14 to drive the trolley 12 allows to have shears 10 which are quicker and therefore more productive, extremely precise, silent and using very little energy.

According to the invention, the suspended position of the trolley 12 ensures that the linear motor 14 and the rails 13 are protected from the chips, dust and other dirt deriving from the shearing cycles.

In the embodiment shown here, moreover, this is also guaranteed by the inclusion of delivery nozzles 22 arranged both on the stationary longitudinal beam 20 and also on the movable trolley 12, which deliver jets of air.

Below the trolley 12 there is a container 23 to collect the chips and dirt caused by the shearing operation.

## Claims

1. Flying shears to shear to pre-ordained and desired sizes a base element (11), for example a metallic tube, fed continuously, the shears comprising a trolley (12) movable with alternate motion on a translation rail (13), the trolley (12) being associated with drive means suitable to move it, with every shearing cycle, from a start-of-cycle position (12a) in the direction of feed (17) of the base element (11) to be sheared and to accelerate it to a speed equal to the speed of advance of the base element (11) to allow the base element (11) to be gripped and sheared respectively by clamping organs (15) and shearing organs (16) included on board the trolley (12), shearing having been accomplished in correspondence with an end-of-cycle position (12b) the trolley (12) being returned by the drive means to the start-of-cycle position (12a) wherein it is prepared for the subsequent shearing action, the shears being characterised in that the drive means consist of at least a linear motor (14).

2. Shears as in Claim 1, characterised in that the trolley (12) is suspended from the translation rail (13) located above the trolley (12) itself.

3. Shears as in Claim 1, characterised in that the trolley (12) rests on the translation rail (13) located below the trolley (12) itself.

4. Shears as in any claim from 1 to 3 inclusive, characterised in that the linear motor (14) has magnet-bearing bars (19) solid with the translation rail (13) and coil-bearing bars (21) solid with the trolley (12).

5. Shears as in any claim from 1 to 3 inclusive, characterised in that the linear motor (14) has magnet-bearing bars (19) solid with the trolley (12) and coil-bearing bars (21) solid with the translation rail (13).

6. Shears as in any claim hereinbefore, characterised in that in cooperation with each linear motor (14) there are nozzles (22) to deliver jets of air to protect the linear motors (14) and the sliding guides from chips, dust and other dirt.

7. Shears as in any claim hereinbefore, characterised in that in cooperation with each linear motor (14) there are mechanical protection means of the guard or barrier type.

8. Shears as in any claim hereinbefore, characterised in that in a position below the trolley (12) there are containing means (23) to collect the chips produced during the shearing cycles.

9. Shears as in any claim hereinbefore, characterised in that they have more than one movable trolley (12), each trolley (12) being associated with a respective linear motor (14).
